# EUROPÄISCHE PATENTSCHRIFT

(11) **EP 0 677 554 B1**
(45) Veröffentlichungstag und Bekanntmachung des Hinweises auf die Patenterteilung: **15.07.1998**
(21) Anmeldenummer: 95105264.6
(22) Anmeldetag: 07.04.1995
(51) Int. Cl.: C08L 23/10, C08J 5/16, C08J 5/18

(54) **Polypropylenformmassen**
Moulding composition based on polypropylene
Matière moulable à base de polypropylène

(30) Priorität: 15.04.1994 DE 4413058
(43) Veröffentlichungstag der Anmeldung: 18.10.1995
(73) Patentinhaber: BASF AKTIENGESELLSCHAFT, 67056 Ludwigshafen (DE)
(72) Erfinder: Seiler, Erhard, Dr., D-67067 Ludwigshafen (DE); Schöne, Werner, Dr., D-69198 Ludwigshafen (DE)

(56) Entgegenhaltungen:
- EP-A- 0 138 203
- EP-A- 0 476 401
- EP-A- 0 577 321
- US-A- 5 225 466

## Beschreibung

Die vorliegende Erfindung betrifft Polypropylenformmassen aus
A) Polymerisaten des Propylens und bis zu 20 Gew.-% weiteren Monomeren, enthaltend
B) 0,05 bis 0,4 Gew.-%. eines ein- oder mehrwertigen Carbonsäureamids oder eines Carbonsäureamidgemisches des Molekulargewichts von 150 bis 600,
C) 0,1 bis 3,0 Gew.-% eines Ethylenpolymerisats mit bis zu 20 Gew.-% Comonomere, einer Dichte von 0.890 bis 0,945 g/cm³ und einem MFI-Wert von 10 bis 100 g/10 min, gemessen nach ISO 1133 bei 190 °C/2,16 kg.

Weiterhin betrifft die Erfindung die Verwendung dieser Formmassen zur Herstellung von Formkörpern und Folien sowie aus den Formmassen hergestellte Formkörper und Folien.

Propylenhomopolymerisate und Copolymerisate des Propylens mit weiteren Monomeren (im folgenden unter der Bezeichnung Propylenpolymere zusammengefaßt) dienen bekanntlich zur Herstellung von Folien und Formkörpern aller Art.

Für einige Zwecke wird an das Material die Anforderung einer besonders guten Gleitfähigkeit gestellt, z. B. für Folien für die Verpackungsindustrie oder für Formteile, die Gleitbeanspruchungen ausgesetzt sind, wie Kolben und Zylinder von Injektionsspritzen. Diese Gleitfähigkeit wird durch Zusatz von Gleitmitteln bewirkt, wobei in erster Linie diverse Carbonsäureamide in Betracht kommen, so zum Beispiel Ölsäureamid.

Aus der US-A 5,225,466 sind harzartige Formmassen bekannt, die neben einem Polypropylenharz und einem Ölsäureamid als Gleitmittel mindestens 9 Gew.-% eines linearen Ethylenpolymerisats niederer Dichte aufweisen. Derartige Formmassen werden vor allem für den Spritzgußbereich verwendet.

Als nachteilig hat sich aber erwiesen, daß die aus den Formmassen hergestellten Formkörper oder Folien das Gleitmittel wieder ausschwitzen. Dies führt zu einer unerwünschten Eintrübung der Folien und Formkörper und zur Kontaminierung der mit ihnen in Berührung kommenden Substanzen.

Der vorliegenden Erfindung lag daher die Aufgabe zugrunde, diesen Nachteilen abzuhelfen.

Demgemäß wurden die eingangs definierten Formmassen gefunden. Außerdem wurde die Verwendung dieser Formmassen für die Herstellung von Folien und Formkörpern gefunden.

Als Komponente A kommt in erster Linie Polypropylen in Betracht. Daneben eignen sich aber auch Copolymerisate mit bis zu 20 Gew.-%, vorzugsweise 0,1 bis 10, besonders 0,5 bis 8 Gew.-% weiteren Monomeren wie C₄- bis C₈- Alk-1-enen und vor allem Ethylen, sowie auch von Mischungen dieser Monomeren.

Entsprechend den Anforderungen die an einen technischen Werkstoff gestellt werden, haben diese Polymerisate vorzugsweise einen Schmelzindex (MFI, melt flow index) von 0,1 bis 100, besonders von 1,5 bis 80 g/10 min, gemessen nach ISO 1133 bei 230 °C und 2,16 kg Belastung.

Die Polymerisate A, die für sich oder in Form einer Mischung verwendet werden können, sind an sich bekannt und größtenteils handelsüblich oder in an sich bekannter Weise erhältlich, so daß sich nähere Angaben hierzu erübrigen.

Als besonders gut geeignet haben sich zum Beispiel PropylenHomopolymerisate mit MFI-Werten von 8 bis 25 g/10 min und Copolymerisate aus 98 Gew.-% Propylen und 2 Gew.-% Ethylen mit MFI-Werten von 8 bis 25 g/10 min erwiesen.

Bei der Komponente B handelt es sich um vollständig amidierte ein- oder mehrwertige Carbonsauren mit einem Molekulargewicht von 150 bis 600, vorzugsweise um die Amide von gesättigten und ungesättigten Fettsäuren der Reihe von Nonansäureamid (MG = 157) bis zum C40-Fettsäureamid (MG = 591).

In erfindungsgemäßen Massen mit Amiden dieses Bereiches neigt das Amid nicht zum Ausbluten. Trotzdem werden sonst nur mit größeren Gleitmittelmengen erzielbare Gleiteigenschaften erreicht.

Besonders geeignet sind Fettsäureamide des Molekulargewichtsbereichs von 280 bis 350, wobei Ölsäureamid (9-Octadecensäureamid) und Erucasäureamid (13-Docosensäureamid) besonders hervorgehoben seien. Außer den Amiden einwertiger Fettsäuren eignen sich auch solche mehrwertiger Säuren, z.B. Ethylen-bis-oleamid und Ethylen-bis-stearylamid. Ferner kann man auch Mischungen verschiedener definitionsgemäßer Amide verwenden.

Die Amide B sind größtenteils bekannt und auch handelsüblich, und sie können in bekannter Weise hergestellt werden.

Der Anteil der Amide B in den erfindungsgemäßen Formmassen beträgt 0,05 bis 0,4, vorzugsweise 0,1 bis 0,3 Gew.-%.

Die Ethylenpolymerisate C haben eine Dichte von 0,890 bis 0,945, vorzugsweise von 0,900 bis 0,935 g/cm³ und einen Schmelzindex (MFI) von 10 bis 100, vorzugsweise 20 bis 50/10 min, gemessen nach ISO 1133 bei 190 °C/2,16 kg.

Besonders gut eignen sich Homopolymerisate des Ethylens, daneben aber auch Copolymerisate des Ethylens mit bis zu 20, vorzugsweise 2 bis 10 Gew.-% anderer Monomeren wie vor allem Propylen, C₄-C₈-Alk-1-enen oder Gemischen dieser Olefine. Weitere geeignete Comonomere sind Acrylsäure, Methacrylsäure, C₁-C₁₀-Ester dieser Säuren sowie Carbonsäureester des Vinylalkohols, oder Gemische dieser polaren Monomeren.

Die Ethylenpolymerisate sind an sich bekannt, zum Teil handelsüblich, oder in an sich bekannter Weise erhältlich.

Der Anteil der Komponente C in den erfindungsgemäßen Formmassen liegt im Bereich von 0,1 bis 3,0, vorzugsweise von 0,2 bis 2,0 Gew.-%.

Die erfindungsgemäßen Formmassen aus den drei Komponenten (A) bis (C) können für sich allein für die Herstellung von Folien und Formkörpern verwendet werden oder in Mischungen mit beliebigen Zusatzstoffen wie Farbstoffen, Pigmenten, Lichtschutzmitteln, Füllstoffen, Antioxidantien, Antistatika, Korrosionsschutzmitteln und Nukleierungsmitteln, in den Mengen, die für den jeweiligen Zweck üblich sind. Darüberhinaus können die erfindungsgemäßen Formmassen auch Paraffin- und/oder Siliconöle enthalten und sie können auch mit anderen Formmassen abgemischt werden.

Die Herstellung der Formmassen kann nach den üblichen Misch- und Plastifizierverfahren erfolgen, wobei es auf die Reihenfolge der Vermischung nicht ankommt. Vorzugsweise vermischt man die Komponenten A bis C und gegebenenfalls die Zusatzstoffe in trockener Form und schmilzt diese in einem Extruder auf, wo sie dann homogenisiert werden.

Die erfindungsgemäßen Formmassen zeichnen sich dadurch aus, daß sie sich besonders vorteilhaft zu Folien und Formkörpern mit guter Transparenz und guter Gleitfähigkeit verarbeiten lassen.

### Beispiele

Hier wurden folgende Komponenten für die Formmassen gemäß der Erfindung und dem Stand der Technik eingesetzt:
- A/1: Copolymerisat aus 97,5 Gew.-% Propylen und 2,5 Gew.-% Ethylen, MFI = 15 g/10 min bzw.
- A/2: Polypropylen, MFI = 22 g/10 min,
- B/1: Olsäureamid und
- C/1: Polyethylen, Dichte = 0,925 g/cm³, MFI = 45 g/10 min,
die, bezogen auf die Menge der Komponenten A/1 bis C/1 bzw. A/2 bis C/1, noch 0,2 Gew.-% Dimethylbenzylidensorbit als Nucleierungsmittel enthielten.

### Beispiele 1 bis 3 und Vergleichsbeispiele 1 V bis 3 V

Erfindungsgemäße Formmassen wurden zu Zylindern von Einwegspritzen verarbeitet.

Die Zylinder wurden 7 Tage lang bei 60 °C gelagert, wonach die Gleitfähigkeit in der praktischen Handhabung sowie die Ausblühungen visuell festgestellt wurden.

Die Tabelle zeigt die Einzelheiten dieser Versuche.

**Tabelle**

| Versuch | Formmasse | Gew.-% | Gleitfähigkeit | Ausblühungen |
|---|---|---|---|---|
| 1 | A/1, | 98,9 | gut | keine |
| | B/1, | 0,1 | | |
| | C/1, | 1,0 | | |
| 1 V | A/1, | 99,9 | nicht ausreichend | keine |
| | B/1, | 0,1 | | |
| 2 | A/1, | 97,9 | gut | keine |
| | B/1, | 0,1 | | |
| | C/1 | 2,0 | | |
| 2 V | A/1, | 99,8 | gut | deutlich |
| | B/1, | 0,2 | | |
| 3 | A/2, | 98,9 | gut | keine |
| | B/1, | 0,1 | | |
| | C/1, | 1,0 | | |
| 3 V | A/2, | 99,9 | nicht ausreichend | keine |
| | B/1, | 0,1 | | |

### Beispiel 4

Die Zusammensetzung der Komponenten A/1 bis C/1 entnehme man Beispiel 1.

Eine Formmasse aus

| | |
|---|---|
| 98,83 | Gew.-% der Komponente A/1, |
| 0,17 | Gew.-% der Komponente B/1 und |
| 1,00 | Gew.-% der Komponente C/1, |

die, bezogen auf die Menge von A/1 bis C/1, noch

| | |
|---|---|
| 0,15 | Gew.-% SiO₂ als Antiblockiermittel |

enthielt, wurde zu Folien mit einer Dicke von 50 µm verarbeitet.

Die Folien zeigten eine gute Transparenz, sehr wenig Ausblühungen und hatten einen Reibungskoeffizienten (cof = coefficient of friction) von 0,13 gemessen nach DIN 53 375. Bei diesem Test wird eine mit einem Gewicht belastete Folie über eine fest eingespannte Folie bewegt, die Gleitreibungskraft bestimmt und der Quotient aus Gleitreibungskraft und Normalkraft errechnet.

Der gleiche cof-Wert wurde mit 2,0 Gew.-% C/1 erzielt, wogegen er ohne Mitverwendung der Komponente C/1 auf 0,30 anstieg.

## Patentansprüche

1. Formmassen aus
A) Polymerisaten des Propylens und bis zu 20 Gew.-% weiteren Monomeren, enthaltend
B) 0,05 bis 0,4 Gew.-% eines ein- oder mehrwertigen Carbonsäureamids oder eines Carbonsäureamidgemisches des Molekulargewichts von 150 bis 600,
C) 0,1 bis 3,0 Gew.-% eines Ethylenpolymerisats mit bis zu 20 Gew.-% Comonomere, einer Dichte von 0.890 bis 0,945 g/cm³ und einem MFI-Wert von 10 bis 100 g/10 min, gemessen nach ISO 1133 bei 190 °C/2,16 kg.

2. Formmassen nach Anspruch 1, enthaltend als Komponente A ein Homopolymerisat des Propylens.

3. Formmassen nach Anspruch 1, enthaltend als Komponente A ein Copolymerisat aus 90 bis 99,9 Gew.-% Propylen und 0,1 bis 10 Gew.-% Ethylen oder/und eines C₄-C₁₀-Alk-1-ens.

4. Formmassen nach den Ansprüchen 1 bis 3, enthaltend 0,08 bis 0,2 Gew.-% der Komponente B.

5. Formmassen nach den Ansprüchen 1 bis 4, enthaltend als Komponente B 13-Docosensäureamid (Erucasäureamid) oder/und 9-Octadecensäureamid (Ölsäureamid).

6. Verwendung der Polypropylenformmassen gemäß den Ansprüchen 1 bis 5 zur Herstellung von Formkörpern und Folien.

7. Folien und Formkörper aus den Polypropylenformmassen gemäß den Ansprüchen 1 bis 5.

8. Injektionsspritzen aus den Polypropylenformmassen gemäß den Ansprüchen 1 bis 5.

## Claims

1. A molding material comprising
A) polymers of propylene and up to 20% by weight of further monomers, containing
B) from 0.05 to 0.4% by weight of a monofunctional or polyfunctional carboxamide or of a carboxamide mixture having a molecular weight of from 150 to 600 and
C) from 0.1 to 3.0% by weight of an ethylene polymer with up to 20% by weight of comonomers, having a density of from 0.890 to 0.945 g/cm³ and an MFI of from 10 to 100 g/10 min, measured according to ISO 1133 at 190°C/2.16 kg.

2. A molding material as claimed in claim 1, containing, as component A, a homopolymer of propylene.

3. A molding material as claimed in claim 1, containing, as component A, a copolymer of from 90 to 99.9% by weight of propylene and from 0.1 to 10% by weight of ethylene and/or of a C₄-C₁₀-alk-1-ene.

4. A molding material as claimed in any of claims 1 to 3, containing from 0.08 to 0.2% by weight of component B.

5. A molding material as claimed in any of claims 1 to 4, containing, as component B, 13-docosenamide (erucamide) and/or 9-octadecenamide (oleamide).

6. The use of a polypropylene molding material as claimed in any of claims 1 to 5 for the production of moldings and films.

7. A film or molding comprising a polypropylene molding material as claimed in any of claims 1 to 5.

8. An injection syringe comprising a polypropylene molding material as claimed in any of claims 1 to 5.

## Revendications

1. Masses à mouler constituées
A) de polymères du propylène et de jusqu'à 20% en poids d'autres monomères, qui contiennent
B) de 0,05 à 0,4% en poids d'un amide d'acide carboxylique mono- à quadrifonctionnel ou d'un mélange d'amides d'acides carboxyliques mono- à quadrifonctionnels d'un poids moléculaire de 150 à 600,
C) de 0,1 à 3,0% en poids d'un polymère de l'éthylène avec jusqu'à 20% en poids de comonomères, d'une masse spécifique de 0,890 à 0,945 g/cm³ et d'une valeur de MFI de 10 à 100g/10min, mesurée selon ISO 1133 à 190°C/2,16 kg.

2. Masses à mouler suivant la revendication 1, contenant un homopolymère du propylène à titre de composant A.

3. Masses à mouler suivant la revendication 1, contenant à titre de composant A, un copolymère constitué de 90 à 99,9% en poids de propylène et de 0,1 à 10% en poids d'éthylène et/ou d'un alc-1-ène en C₄ à C₁₀.

4. Masses à mouler suivant les revendications 1 à 3, contenant de 0,08 à 0,2% en poids du composant B.

5. Masses à mouler suivant les revendications 1 à 4, contenant à titre de composant B, l'amide de l'acide 13-docosénoïque (amide de l'acide érucique) et/ou l'amide de l'acide 9-octadécénoïque (amide de l'acide oléique).

6. Utilisation de masses à mouler en polypropylène suivant les revendications 1 à 5, en vue de la fabrication d'articles ou corps moulés et de feuilles.

7. Feuilles et articles ou corps moulés en les masses à mouler de polypropylène suivant les revendications 1 à 5.

8. Seringues d'injection en les masses à mouler de polypropylène suivant les revendications 1 à 5.
